# EUROPÄISCHE PATENTSCHRIFT

(11) **EP 1 178 874 B1**
(45) Veröffentlichungstag und Bekanntmachung des Hinweises auf die Patenterteilung: **20.04.2005**
(21) Anmeldenummer: 00918826.9
(22) Anmeldetag: 22.03.2000
(51) Int. Cl.: B25J 9/04, B25J 19/00

(54) **INDUSTRIEROBOTER**
INDUSTRIAL ROBOT
ROBOT INDUSTRIEL

(30) Priorität: 29.04.1999 DE 19919662
(43) Veröffentlichungstag der Anmeldung: 13.02.2002
(73) Patentinhaber: Volkswagen Aktiengesellschaft, 38436 Wolfsburg (DE)
(72) Erfinder: DEHN, Thomas, D-38436 Wolfsburg (DE); ULRICH, Werner, D-38448 Wolfsburg (DE)
(74) Vertreter: Pohlmann, Bernd Michael, Dr.
(86) Internationale Anmeldenummer: PCT/EP2000/002520
(87) Internationale Veröffentlichungsnummer: WO 2000/066331

(56) Entgegenhaltungen:
- EP-A- 0 078 251
- DE-A- 3 300 361
- DE-A- 4 001 885
- DE-A- 4 132 289
- DE-U- 29 711 523

## Beschreibung

Die Erfindung betrifft einen Industrieroboter, nach dem Oberbegriff des Anspruchs 1.

Als Industrieroboter werden automatische Handhabungseinrichtungen bezeichnet, die für den industriellen Einsatz konzipiert sind und in mindestens drei Freiheitsgraden frei programmierbar sind. Sie sind entweder mit Greifern oder Werkzeugen ausgerüstet. Die Verwendung von Industrierobotern trägt zur Reduzierung von körperlichen und Umgebungsbelastungen bei. Sie sind sehr flexibel und ermöglichen folglich bei Veränderungen der betrieblichen Produktionsabläufe schnelle und kostengünstige Umstellungen. Wichtige Teilsysteme eines Industrieroboters sind die Kinematik, das Steuerungssystem, das Antriebssystem, das Wegmeßsystem und das Sensorsystem. Bei der Kinematik unterscheidet man rotartorische und translatorische Elemente.

Bekannte sechsachsige Industrieroboter - Industrieroboter mit sechs Freiheitsgraden - weisen einen Gelenkarm auf. Bei diesen sogenannten Gelenkarmrobotern stellt die Achse, um die der Roboter auf dem Drehturm drehen kann, eine "Achse 1" dar. An dem Drehturm ist der Gelenkarm in unmittelbarer Nähe zu einem Unterbau des Roboters schwenkbar angeordnet. Die Achse, um die diese Schwenkung erfolgt, ist als "Achse 2" bezeichnet. An dem dem Drehturm abgewandten Ende des Gelenkarms ist ein Handachsenantrieb ebenfalls schwenkbar angeordnet. Die Achse, um die der Handachsenantrieb schwenkt, ist als "Achse 3" benannt. Am freien Ende des Handachsenantriebs schließt sich ein Hatsstück an, an dem ein Handachsenkopf vorgesehen ist. Hals und Handachsenkopf ermöglichen die Schwenkbarkeit des Roboters um die Achsen 4, 5 und 6.

Für den Fall, daß die bekannten Gelenkarmroboter eine Arbeitsposition einnehmen, bei der Gelenkarm und Hals koaxial zueinander positioniert sind - Gelenkarm und Handachsenantrieb weisen in eine Richtung -, in der also der Roboter seine maximale Auslegerlänge erreicht, treten in der Lagerung der Schwenkachse 2 erhebliche Momente auf. Insbesondere bei großen Traglasten reicht in diesen Fällen der Antrieb des Roboters zur Schwenkung um die Achse 2 nicht aus. Die verwendeten untersetzten Getriebe nehmen dadurch häufig Schaden.

Zur Beseitigung dieses Problems finden üblicherweise Drehmomentunterstützungen Anwendung. Dies bringt jedoch häufig den Nachteil mit sich, daß dadurch der Aktionsbereich des Roboters eingeschränkt wird. Als Drehmomentunterstützung finden beispielsweise Luftzylinder oder mechanische Federn Anwendung, die sich beim Schwenken in den ungünstigen Bereich spannen können und dadurch eine Rückkehr in einen günstigeren Arbeitsbereich unterstützen. Dadurch ist jedoch der konstruktive Aufwand der Industrieroboter erhöht. Weiterhin bedürfen die zusätzlichen Federn ebenfalls der Wartung, was den Wartungsaufwand insgesamt erhöht.

Aus der EP 0078 251 A1 ist ein Industrieroboter in Drehgelenkbauweise bekannt, der eine Säule umfasst, die über einen Sockel um eine Achse I verdrehbar ist. An ihrem freien Ende trägt die Säule einen Arm, der um eine Achse 11 drehbar ist. Der Arm trägt einen weiteren Arm, der um eine Achse III verdrehbar ist und der an seinem freien Ende eine Halterung für ein Werkzeug trägt. Die Halterung ist um eine Achse IV und das Werkzeug um eine Achse VI verdrehbar. Insbesondere bei Bewegungen um die Achse 11 können starke Drehmomentbelastungen bei dem bekannten Industrieroboter auftreten. Ferner ist aus der DE 40 01 885 A1 ein Industrieroboter bekannt, der ein Gestell aufweist, dass mit einer Gestellgabel versehen ist. An der Gestellgabel ist eine Schwinge angeordnet. Ferner ist das Gestell um eine Gesteildrehachse drehbar. Die Schwinge ist um eine horizontale Schwenkachse an der Gesiellgabel schwenkbar gelagert. Am oberen Ende der Schwinge ist ein Ausleger um eine Schwenkachse einseitig an der Schwinge gelagert. Am Ende des Auslegers ist eine Roboterhand angeordnet. Die Schwinge ist einarmig ausgebildet und weist im unteren Bereich eine seitliche Kröpfung auf. Im Bereich der Kröpfung ist der Motor für den Schwenkantrieb des Auslegers angeordnet und dabei ungefähr in der Ebene durch die Gestelldrehachse positioniert. Dadurch können beträchtliche Drehmomente auf die horizontale Schwenkachse an der Gestellgabel auftreten. Zum Massenausgleich befindet sich der Schwenkantrieb für die Schwenkachse auf der der Schwinge gegenüberliegenden Seite der Gestellgabel. Ferner ist aus der DE 41 32 289 A1 eine automatische Schweißanlage bekannt, die eine feste Haltebasis umfasst. Die feste Haltebasis trägt einen Drehkopf, der um eine vertikale Achse drehbar ist. Der Drehkopf dreht seinerseits einen Gelenkarm, welcher am Drehkopf um eine horizontale Achse drehbar ist. Der Gelenkarm wird von zwei Teilen gebildet, welche um eine Achse gelenkig miteinander verbunden sind. Das freie Ende eines Teilarmes trägt ein Handgelenk, welches eine Schweißpistole oder dergleichen aufnehmen kann. Der andere Teilarm hat ein Gegengewicht von dem restlichen Teil des Arms aus gesehen, welches auf der gegenüberliegenden Seite zur Gelenkachse angeordnet ist.

Der Erfindung liegt die Aufgabe zugrunde, einen Industrieroboter mit sechs Achsen zu schaffen mit einer besseren Auswuchtung des Kurbelarms relativ zur Schwenkachse A2.

Gemäß der Erfindung wird diese Aufgabe durch die Merkmale des Anspruchs 1 gelöst.

Mit der Erfindung ist ein mindestens vierachsiger, insbesondere sechsachsiger Industrieroboter geschaffen, bei dem keine zusätzlichen konstruktiven Maßnahmen zur Abstützung der Drehmomente erforderlich sind. Infolgedessen ist der konstruktive Aufwand sowie der Aufwand für die Wartung des Industrieroboters insgesamt reduziert. Außerdem ist bei dem erfindungsgemäßen Roboter die Achse 2 gegenüber herkömmlichen Robotern höher angeordnet. Es ergibt sich daraus ein kinematisch größerer Arbeitsbereich.

Roboter sind grundsätzlich in allen Achsen frei programmierbar. Vorzugsweise hat der Roboter drei Positionierachsen (A1 - A3) und drei Orientierachsen (A4 - A6). Vorteilhaft erlaubt die erfindungsgemäße Variante eine Traglast in allen Positionen von ≥ 25 kg, vorzugsweise ≥ 40 kg und insbesondere ≥ 80 kg. Der Arbeitsbereich beträgt hier (A1 bis Fianschhandachsenkopf) ≥ 1 m, vorzugsweise ≥ 1,50 m und insbesondere ≥ 2,0 m. Das typische Gewicht beträgt ca. 200 kg - 3 t.

In Weiterbildung der Erfindung ist zwischen dem Handachsenantrieb und dem Ausleger ein Kurbelarm angeordnet. Durch den Kurbelarm ist eine erhöhte Gelenkigkeit des Industrieroboters erreicht. Da der Arbeitsraum vor und hinter dem Roboter nahezu gleich groß ist, ist die Raumausnutzung durch den Roboter verbessert. Mit Hilfe des Kurbelarms kann der Drehwinkel der Achse 2 je nach Ausführung kinematisch größer als 360° sein, insbesondere kann der Kurbelarm durchtauchen (bei angewinkeltem Handachsenhals). Vorteilhaft beträgt der Aktionsradius des Kurbelarmes mindestens 250°, vorzugsweise ≥ 300° und insbesondere ≥ 340°.

Bevorzugt ist auf der dem Handachsenantrieb abgewandten Seite des Kurbelarms ein Motor vorgesehen. Mit dieser Anordnung, bei der der Antrieb der Achse 3 hinter der Drehachse 2 liegt, ist es möglich, den Kurbelarm annähernd statisch auszuwuchten, so daß der Arbeitsbereich nicht eingeschränkt ist, sondern sogar größer sein kann als bei einem Gelenkarmroboter.

Wichtiges Einsatzgebiet von Industrierobotern ist der Einsatz als Schweißroboter. Hierzu können die Roboter einen Schweißtranformator aufnehmen, der die für ein Schweißgerät erforderliche Energieversorgung sicherstellt. Der Schweißtransformator ist bei bekannten Schweißrobotern auf dem Handachsenantrieb montiert. Dies hat eine hohe Getriebebelastung zur Folge, weshalb üblicherweise an dem Handachsenantrieb Gegengewichte angebracht werden. Dies führt jedoch einerseits zu erhöhten Kosten und andererseits in der Regel zu einer Reduzierung des Aktionsradius/des Arbeitsbereichs des Roboters. Deshalb ist in anderer Weiterbildung der Erfindung auf den Drehturm ein Schweißtransformator angeordnet. Auch ist es in Ausgestaltung der Erfindung möglich, den Schweißtransformator auf der dem Hals abgewandten Seite des Drehgelenks um die Achse A3 anzuordnen. Dadurch kann auf das Anbringen von Gegengewichten am Handachsenantrieb verzichtet werden. Auch wird der Arbeitsbereich nicht verkleinert.

Die Vorteile der vorliegenden Erfindung sind:
- Verzicht auf Momentenunterstützung (Feder, Gegengewicht) möglich,
- Durchtauchen des Kurbelarms (A2) möglich,
- statisches Auswuchten des Kurbelarms möglich ohne Einschränkung des hohen Aktionsradius (z. B. mit Motor A3),
- etwa kugelförmiger Arbeitsbereich (ohne A1),
- Schweißtrafo auf dem Drehturm möglich.

Vorteilhafte Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im einzelnen beschrieben. Es zeigen:

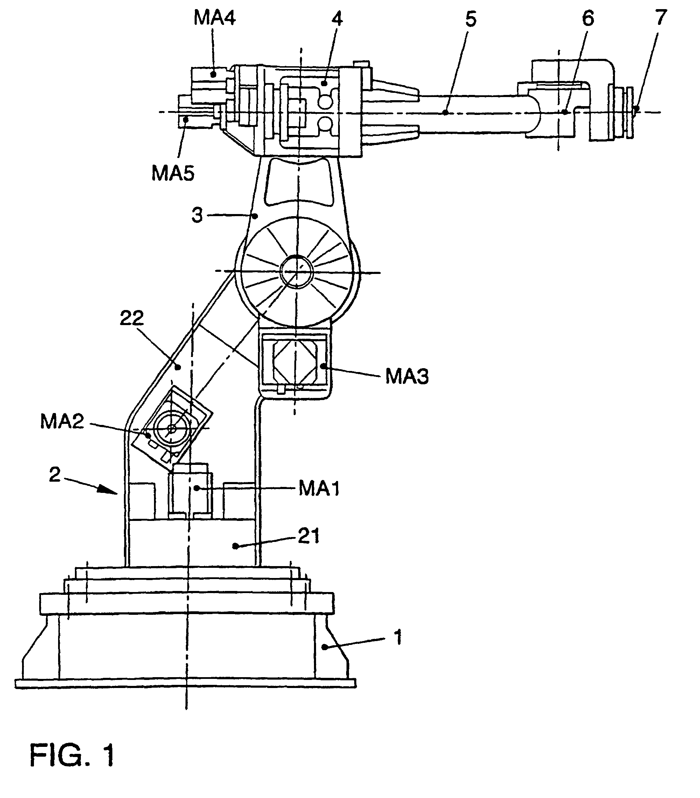

- Figur 1:: die Seitenansicht eines Industrieroboters mit sechs Achsen;
- Figur 2:: die Ansicht des in Figur 1 dargestellten Industrieroboters von vorne und
- Figur 3:: den Industrieroboter nach den Figuren 1 und 2 in verschiedenen Arbeitspositionen mit der Darstellung des möglichen Arbeitsbereichs.

Der als Ausführungsbeispiel gewählte Industrieroboter weist sechs Freiheitsgrade auf. Er ist folglich um sechs Achsen schwenkbar. Die Achsen sind in der Zeichnung mit den Bezeichnungen A1 bis A6 versehen.

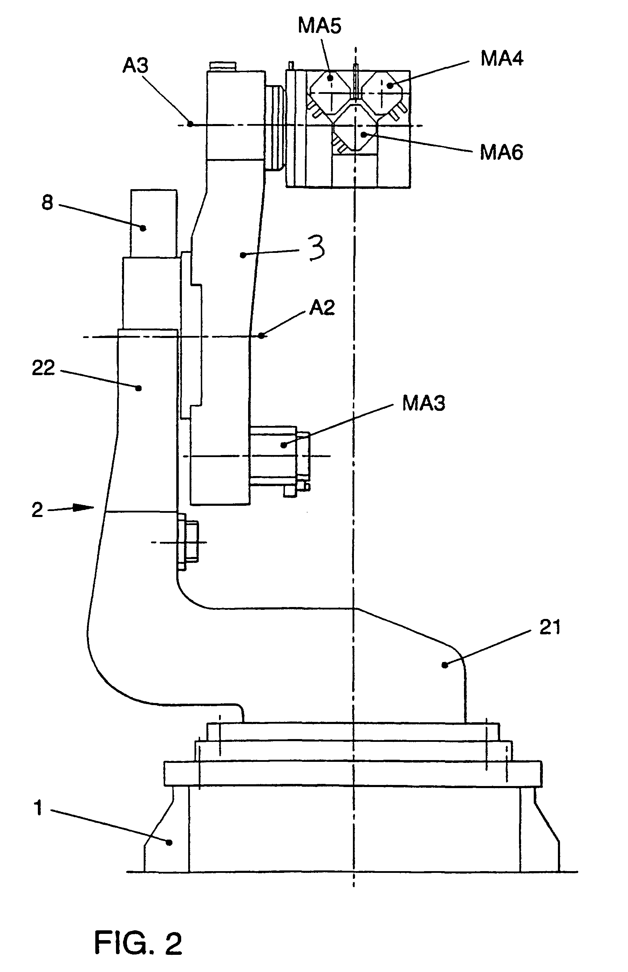

Der Industrieroboter weist einen Unterbau 1 auf, auf dem ein Drehturm 2 angeordnet ist. Der Drehturm 2 ist um die Achse A1 mit Hilfe eines Motors MA1 drehbar. Er weist eine Basis 21 und einen Ausleger 22 auf. Die Basis 21 stellt dabei eine Anordnung zur Verfügung, die bei den aus dem Stand der Technik bekannten Gelenkarmrobotern im wesentlichen den gesamten Drehturm ausmacht. Auf der Basis 21 ist der Motor MA1 angeordnet. Der Ausleger 22 erstreckt sich im Ausführungsbeispiel in der Ansicht von vorne - Figur 2 - parallel zur Achse A1 senkrecht in die dem Unterbau 1 abgewandte Richtung - nach oben -. An seinem freien Ende ist der Drehpunkt der Achse A2 angeordnet. Mit Hilfe des Auslegers 22 ist die Achse A2 vom Unterbau 1 des Roboters nach oben hin versetzt.

An dem dem Unterbau 1 abgewandten Ende des Auslegers 22 ist ein Kurbelarm 3 angeordnet. Der Kurbelarm 3 ist um die Achse A2 schwenkbar. Der Antrieb erfolgt mit Hilfe eines Motors MA2, der an dem Ausleger 22 angeordnet ist.

Der Kurbelarm 3 weist an seinem dem Drehturm 2 abgewandten Ende einen Handachsenantrieb 4 auf, dessen Längsmittellinie das sogenannte "Hafsstück" mit einem Hals 5 darstellt. Der Hals 5 ist um eine Achse A4 drehbar am Handachsenantrieb 4 angeordnet. Der Antrieb um die Achse A3 erfolgt mit Hilfe eines Motors MA3, der an dem dem Handachsenantrieb 4 abgewandten Ende des Kurbelarms 3 vorgesehen ist. Der Motor MA3 ist vom Handachsenantrieb 4 aus gesehen hinter dem Gelenk der Schwenkachse A2 angeordnet. Die Anordnung des Motors MA3 an dieser Stelle führt zu einer besseren Auswuchtung. Zusätzlich können auf der dem Motor MA3 zugewandten Seite des Kurbelarms 3 Gewichte angebracht sein, die eine drehmoment-unterstützende Wirkung auf die Achse A2 haben. Im optimalen Fall hat die Anordnung des Motors MA3 hinter der Schwenkachse A3 - möglicherweise unter Anbringung von Gegengewichten - eine Auswuchtung des Kurbelarms 3 in bezug auf die am abgewandten Ende angeordneten Bauteile zur Folge. Im Ausführungsbeispiel erfolgt der Antrieb um die Schwenkachse A3 mit Hilfe eines Riementriebs.

Der Hals 5 weist an seinem freien Ende einen Handachsenkopf 6 auf. Der Handachsenkopf 6 ist um eine Achse A5 drehbar. An dem dem Hals 5 abgewandten Ende des Handachsenkopfes 6 ist ein Flansch 7 vorgesehen, der zur Aufnahme von Werkzeugen oder ähnlichem dient. Er ist um die Achse A6 drehbar. Der Antrieb für die Achsen A4, A5 und A6 erfolgt mit Hilfe von Motoren MA4, MA5 und MA6, die im Ausführungsbeispiel alle auf der dem Hals 5 abgewandten Seite des Drehgelenks um die Achse A3 angeordnet sind.

Auf dem Drehturm 2 ist auf seinem dem Unterbau 1 abgewandten Ende ein Schweißtransformator 8 angeordnet. Der Schweißtransformator 8 ist für den Fall erforderlich, in dem der Industrieroboter als Schweißroboter eingesetzt ist. Hierzu stellt er die nötige Energieversorgung des für diesen Anwendungsfall am Flansch 7 vorgesehenen Schweißgeräts sicher.

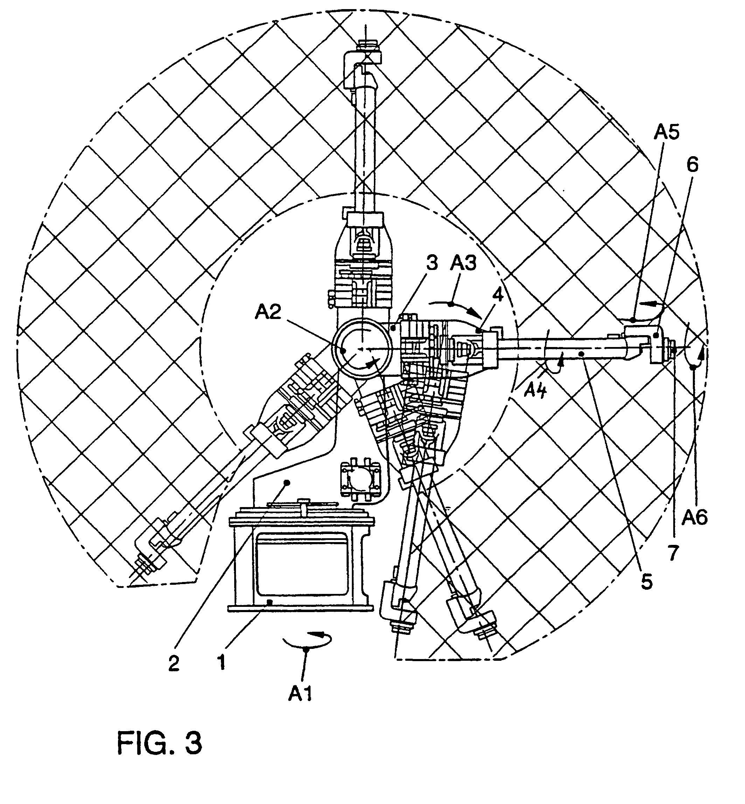

Figur 3 ist zu entnehmen, in welchem Bereich der erfindungsgemäße Industrieroboter arbeitsfähig ist. Er hat im Ausführungsbeispiel eine maximale Reichweite von ca. 2.550 mm. Dabei ist er in der Lage, eine Traglast von ca. 140 kg bei maximaler Auslegerlänge zu heben. Aufgrund der Geometrie des erfindungsgemäßen Industrieroboters ergibt sich bei feststehender Achse A1 ein annähernd kugelförmiger Arbeitsraum. Das bedeutet, daß der Arbeitsbereich auf der rückwärtigen Seite des Roboters ähnlich groß ist, wie auf der vorderen Seite. Darüber hinaus sind infolge der kompakten Bauweise und der dichter an den Drehturm 2 herangelegten Massen höhere Achsgeschwindigkeiten als bei bekannten 6-achsigen Industrierobotern erreichbar. Dies liegt daran, daß der Kurbelarm 3 kürzer ausgeführt ist als bei Gelenkarmrobotem der Gelenkarm. Die Folge ist eine höhere Gelenkigkeit und eine bessere Momentenverteilung um die Drehachsen. Um eine größere Reichweite zu erzielen ist das Halsstück länger ausgeführt als bei vielen Gelenkarmrobotern.

### BEZUGSZEICHENLISTE

- 1: Unterbau
- 2: Drehturm
- 3: Kurbelarm
- 4: Handachsenantrieb
- 5: Hals
- 6: Handachsenkopf
- 7: Flansch
- 8: Schweißtransformator

- 21: Basis
- 22: Ausleger

- A1: Achse 1
- A2: Achse 2
- A3: Achse 3
- A4: Achse 4
- A5: Achse 5
- A6: Achse 6

- MA1: Motor-Achse 1
- MA2: Motor-Achse 2
- MA3: Motor-Achse 3
- MA4: Motor-Achse 4
- MA5: Motor-Achse 5
- MA6: Motor-Achse 6

## Patentansprüche

1. Industrieroboter, der mit mindestens vier Achsen (A1, A2, A3, A4, A5, A6) ausgestattet ist und einen Drehturm (2), einen Hals (5) sowie einen Handachsenantrieb (4) aufweist, wobei der Handachsenantrieb (4) mit einem Handachsenkopf (6) verbunden ist und der Drehturm (2) einen Ausleger (22) aufweist, an dessen freiem Ende das Gelenk der zweiten Achse (A2) vorgesehen ist, wobei zwischen dem Hals (5) und dem Ausleger (22) ein Kurbelarm (3) angeordnet ist, **dadurch gekennzeichnet, dass** der Handachsenantrieb mittels des Halses (5) mit dem Handachsenkopf (6) verbunden ist und der Kurbelarm (3) zwischen dem Handachsenantrieb (4) und dem Ausleger (22) angeordnet ist, und dass an dem dem Handachsenantrieb (4) abgewandten. Ende des Kurbelarms (3) ein Motor (MA3) zum Antrieb des Halses (5) um eine dritte Achse (A3) vorgesehen ist und der Motor (MA3), vom Handachsenantrieb (4) aus gesehen, hinter dem Gelenk der zweiten Achse (A2) angeordnet ist.

2. Industrieroboter nach Anspruch 1, **dadurch gekennzeichnet, dass** der Kurbelarm (3) durchtauchen kann und/oder dass dessen Aktionsradius mindestens 250° beträgt.

3. Industrieroboter nach zumindest einem der vorhergehenden Ansprüche, **dadurch gekennzeichnet, dass** auf der dem Handachsenantrieb (4) abgewandten Ende des Kurbelarms (3) Gewichte angebracht sind.

4. Industrieroboter nach zumindest einem der vorhergehenden Ansprüche, **dadurch gekennzeichnet, dass** auf dem Drehturm (2) ein Schweißtransformator (8) angeordnet ist.

5. Industrieroboter nach zumindest einem der Ansprüche 1 bis 4, **dadurch gekennzeichnet, dass** auf der dem Hals (5) abgewandten Seite des Drehgelenks um die dritte Achse (A3) ein Schweißtransformator (8) angeordnet ist.

## Claims

1. Industrial robot, which is equipped with at least four axes (A1, A2, A3, A4, A5, A6) and has a rotary tower (2), a neck (5) and a wrist axis drive (4), the wrist axis drive (4) being connected to a wrist axis head (6) and the rotary tower (2) having a jib (22), at the free end of which the joint of the second axis (A2) is provided, a crank arm (3) being arranged between the neck (5) and the jib (22), **characterized in that** the wrist axis drive is connected to the wrist axis head (6) by means of the neck (5), and the crank arm (3) is arranged between the wrist axis drive (4) and the jib (22), and **in that**, at the end of the crank arm (3) facing away from the wrist axis drive (4) there is provided a motor (MA3) for driving the neck (5) about a third axis (A3), and the motor (MA3) is arranged behind the joint of the second axis (A2), as seen from the wrist axis drive (4).

2. Industrial robot according to Claim 1, **characterized in that** the crank arm (3) can dip through and/or **in that** its radius of action is at least 250°.

3. Industrial robot according to at least one of the preceding claims, **characterized in that** weights are fitted to the end of the crank arm (3) facing away from the wrist axis drive (4).

4. Industrial robot according to at least one of the preceding claims, **characterized in that** a welding transformer (8) is arranged on the rotary tower (2).

5. Industrial robot according to at least one of Claims 1 to 4, **characterized in that** a welding transformer (8) is arranged around the third axis (A3) on the side of the rotary joint facing away from the neck (5).

## Revendications

1. Robot industriel, qui est muni d'au moins quatre axes (A1, A2, A3, A4, A5, A6) et présente une tourelle (2), un col (5) et un entraînement d'axe manuel (4), l'entraînement d'axe manuel (4) étant connecté à une tête d'axe manuelle (6) et la tourelle (2) présentant une potence (22), à l'extrémité libre de laquelle l'articulation du deuxième axe (A2) est prévue, un bras de manivelle (3) étant disposé entre le col (5) et la potence (22), **caractérisé en ce que** l'entraînement d'axe manuel est connecté au moyen du col (5) à la tête d'axe manuelle (6) et le bras de manivelle (3) est disposé entre l'entraînement d'axe manuel (4) et la potence (22), et **en ce qu'**à l'extrémité du bras de manivelle (3) opposée à l'entraînement d'axe manuel (4) est prévu un moteur (MA3) pour l'entraînement du col (5) autour d'un troisième axe (A3) et le moteur (MA3), vu depuis l'entraînement d'axe manuel (4), est disposé derrière l'articulation du deuxième axe (A2).

2. Robot industriel selon la revendication 1, **caractérisé en ce que** le bras de manivelle (3) peut plonger et/ou son rayon d'action vaut au moins 250°.

3. Robot industriel selon au moins l'une quelconque des revendications précédentes, **caractérisé en ce que** des poids sont montés sur l'extrémité du bras de manivelle (3) opposée à l'entraînement d'axe manuel (4).

4. Robot industriel selon au moins l'une quelconque des revendications précédentes, **caractérisé en ce que** l'on dispose sur la tourelle (2) un transformateur de soudage (8).

5. Robot industriel selon au moins l'une quelconque des revendications 1 à 4, **caractérisé en ce que** l'on dispose sur le côté opposé au col (5) de l'articulation rotative autour du troisième axe (A3), un transformateur de soudage (8).
